# FASCICULE DE BREVET EUROPEEN

(11) **EP 0 547 927 B1**
(45) Date de publication et mention de la délivrance du brevet: **05.04.1995**
(21) Numéro de dépôt: 92403085.1
(22) Date de dépôt: 17.11.1992
(51) Int. Cl.: B01D 53/22, C01B 3/50

(54) **Procédé et installation de production par perméation d'un gaz léger impur**
Verfahren und Vorrichtung zur Herstellung durch Permeation von einem unreinen leichten Gas
Process and apparatus for the production by permeation of an impure light gas

(30) Priorité: 18.12.1991 FR 9114167
(43) Date de publication de la demande: 23.06.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Monereau, Christian, F-75011 Paris (FR)
(74) Mandataire: Le Moenner, Gabriel

(56) Documents cités:
- EP-A- 0 051 469
- EP-A- 0 358 551
- GB-A- 2 053 021
- US-A- 3 208 197
- US-A- 3 250 080

## Description

La présente invention est relative à un procédé et une installation de production par perméation d'un gaz léger impur à partir d'un mélange gazeux de départ. Elle s'applique en particulier à la production d'hydrogène impur à partir d'un mélange constitué essentiellement d'hydrogène, d'azote et d'hydrocarbures.

Dans certaines applications industrielles, on a besoin d'hydrogène à une faible pureté, inférieure à celle que permettent d'obtenir les perméateurs simples, c'est-à-dire ayant une entrée et deux sorties actives, à savoir une entrée haute pression, une sortie haute pression et une sortie basse pression.

Pour augmenter le rendement d'extraction en hydrogène tout en abaissant la pureté, on a proposé de by-passer une partie du courant d'alimentation ou "feed". On a proposé également, dans le même but, d'utiliser à la place des perméateurs simples des perméateurs à reflux, dans lesquels une partie du gaz résiduaire est renvoyée dans l'espace basse pression afin d'y abaisser la pression partielle d'hydrogène. Ces artifices permettent effectivement d'augmenter le rendement d'extraction en hydrogène ou, pour un rendement donné, de diminuer l'investissement, c'est-à-dire essentiellement l'aire de membrane de perméation nécessaire.

L'invention a pour but d'augmenter dans une mesure beaucoup plus importante le gain en rendement d'extraction ou en investissement.

A cet effet, le procédé suivant l'invention est caractérisé en ce que :
- on utilise une installation de perméation comprenant deux étages de perméation ayant chacun une entrée haute pression de mélange gazeux à traiter, une sortie haute pression de gaz résiduaire et une sortie basse pression de perméat,
   . le premier étage étant constitué d'un perméateur simple, c'est-à-dire ayant une entrée active et deux sorties actives, à savoir une entrée haute pression de mélange gazeux à traiter, une sortie haute pression de gaz résiduaire et une sortie basse pression de perméat, ou bien de plusieurs perméateurs simples montés en série et/ou en parallèle;
   . le deuxième étage étant constitué d'un perméateur à reflux, c'est-à-dire ayant deux entrées et deux sorties actives, à savoir une entrée haute pression de mélange gazeux à traiter, une sortie haute pression de gaz résiduaire, une entrée basse pression de mélange gazeux de reflux et une sortie basse pression de perméat, ou bien de plusieurs perméateurs à reflux montés en série et/ou en parallèle;
- on introduit le mélange gazeux de départ à l'entrée haute pression du premier étage;
- on introduit le gaz résiduaire du premier étage à l'entrée haute pression du deuxième étage;
- on introduit à l'entrée basse pression du deuxième étage un mélange gazeux de reflux prélevé dans l'installation et ayant une teneur en ledit gaz léger inférieure à celle dudit gaz léger de production; et
- on réunit les perméats des deux étages pour constituer ledit gaz léger impur de production.

Le mélange gazeux de reflux peut notamment être prélevé sur le gaz résiduaire du deuxième étage.

L'invention a également pour objet une installation destinée à la mise en oeuvre d'un tel procédé. Cette installation est caractérisée en ce qu'elle comprend deux étages de perméation ayant chacun une entrée haute pression de mélange gazeux à traiter, une sortie haute pression de gaz résiduaire et une sortie basse pression de perméat,
- le premier étage étant constitué d'un perméateur simple, c'est-à-dire ayant une entrée active et deux sorties actives, à savoir une entrée haute pression de mélange gazeux à traiter, une sortie haute pression de gaz résiduaire et une sortie basse pression de perméat, ou bien de plusieurs perméateurs simples montés en série et/ou en parallèle;
- le deuxième étage étant constitué d'un perméateur à reflux, c'est-à-dire ayant deux entrées et deux sorties actives, à savoir une entrée haute pression de mélange gazeux à traiter, une sortie haute pression de gaz résiduaire, une entrée basse pression de mélange gazeux de reflux et une sortie basse pression de perméat, ou bien de plusieurs perméateurs à reflux montés en série et/ou en parallèles;
- la sortie haute pression du premier étage étant reliée à l'entrée haute pression du deuxième étage;
- l'installation comprenant une conduite d'alimentation reliée à l'entrée haute pression du premier étage, une conduite de production reliée aux sorties basse pression des deux étages, et, pour le ou chaque perméateur du deuxième étage, une conduite de reflux aboutissant à l'entrée basse pression de ce perméateur et véhiculant un mélange gazeux de reflux prélevé dans l'installation et ayant une teneur en ledit gaz léger inférieure à celle dudit gaz léger impur de production.

Des exemples de mise en oeuvre de l'invention vont maintenant être décrits en regard du dessin annexé, sur lequel :
- la Figure 1 représente schématiquement une installation de perméation conforme à l'invention; et
- les Figures 2 et 3 représentent schématiquement deux variantes.

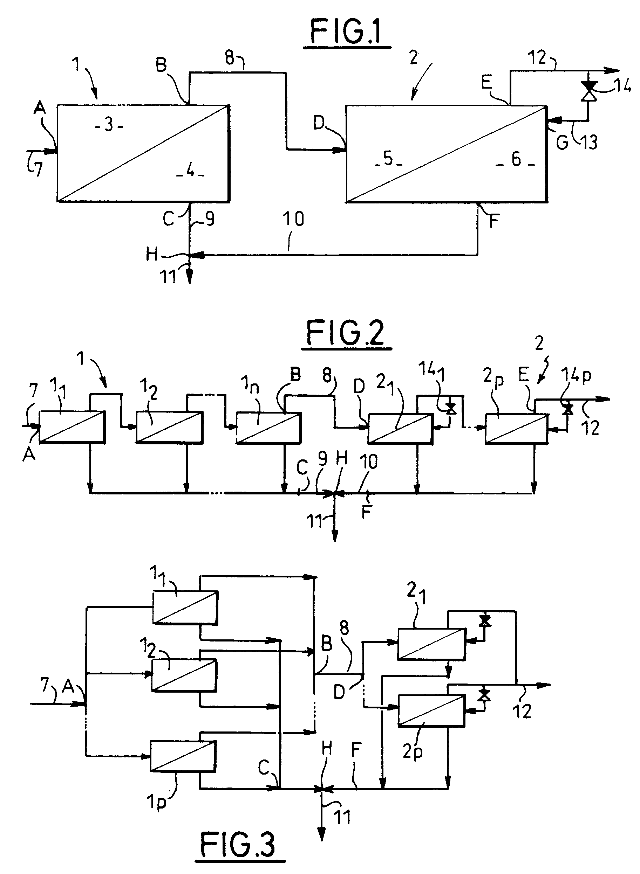

L'installation représentée à la Figure 1 est constituée de deux étages de perméation 1 et 2 montés en série. Dans l'exemple considéré, elle est destinée à produire de l'hydrogène impur ayant une pureté de l'ordre de 85% avec un rendement d'extraction en hydrogène supérieur à 90%.

L'étage 1 est constitué d'un perméateur simple, c'est-à-dire dont l'espace haute pression 3 comporte une entrée haute pression A et une sortie haute pression B et dont l'espace basse pression 4 comporte uniquement une sortie basse pression C.

L'étage 2 est constitué d'un perméateur à reflux, c'est-à-dire dont l'espace haute pression 5 comporte une entrée haute pression D et une sortie haute pression E et dont l'espace basse pression 6 comporte, outre une sortie basse pression F, une entrée basse pression G.

L'installation comporte encore une conduite d'alimentation 7 reliée à l'entrée A, une conduite de liaison 8 reliant la sortie B à l'entrée D, une conduite 9 partant de la sortie C, une conduite 10 reliant la sortie F à un point H de la conduite 9, une conduite de production 11 partant du point H, une conduite d'évacuation de gaz résiduaire 12 partant de la sortie E, et une conduite de reflux 13 équipée d'une vanne de détente 14 et reliant un point de la conduite 12 à l'entrée G.

En fonctionnement, le mélange de départ, essentiellement constitué d'hydrogène, par exemple à une teneur de l'ordre de 50%, et de produits plus lourds tels que l'azote et des hydrocarbures, est introduit via la conduite 7 sous une pression de quelques dizaines de bars.

Le premier étage 1 produit dans la conduite 9 un premier perméat, et son gaz résiduaire alimente le deuxième étage via la conduite 8. Le deuxième étage produit le gaz résiduaire de l'installation dans la conduite 12, et un deuxième perméat dans la conduite 10. Une partie du gaz résiduaire est renvoyée dans l'espace basse pression 6 via la conduite 13, après détente dans la vanne de détente 14. Les deux perméats sont réunis en H pour constituer l'hydrogène impur de production de l'installation, lequel est évacué via la conduite 11.

On a constaté que, de façon surprenante, la combinaison ainsi décrite d'un perméateur simple et d'un perméateur à reflux, montés en série dans cet ordre, améliore considérablement le rendement d'extraction en hydrogène pour un investissement donné, ou bien, pour un rendement donné, permet de réduire considérablement l'investissement, à savoir l'aire de membrane de perméation nécessaire.

En variante, le gaz de reflux du perméateur 2 peut être prélevé sur la conduite 8 ou sur la conduite 7.

Comme représenté sur la Figure 2, chaque étage 1, 2 peut être constitué non pas par un seul perméateur comme à la Figure 1, mais par plusieurs perméateurs analogues montés en série.

Plus précisément, dans cette variante, l'étage 1 est constitué de n perméateurs simples 1₁..., 1ₙ. L'entrée haute pression du perméateur 1₁ constitue l'entrée haute pression A de l'étage 1, tandis que la sortie haute pression de chacun des perméateurs 1₁..., 1ₙ₋₁ est reliée à l'entrée haute pression du perméateur suivant, celle du perméateur 1ₙ constituant la sortie haute pression B du premier étage. La conduite 9 est reliée à l'ensemble des sorties basse pression des n perméateurs.

De même, l'étage 2 est constitué de p perméateurs à reflux 2₁,...,2ₚ montés en série. Plus précisément, l'entrée haute pression du perméateur 2₁ constitue l'entrée haute pression D de l'étage 2, reliée au point B par la conduite 8, la sortie haute pression de chacun des perméateurs 2₁,...,2ₚ₋₁ est reliée d'une part, via une vanne de détente 14₁,...14ₚ₋₁, à l'entrée basse pression du même perméateur, et d'autre part à l'entrée haute pression du perméateur suivant, tandis que la sortie haute pression du perméateur 2ₚ constitue la sortie haute pression E du deuxième étage.

L'ensemble des sorties basse pression du perméateur du premier étage sont reliées à un même point C, et l'ensemble des sorties basse pression des perméateurs du deuxième étage sont reliées à un même point F. De même qu'à la Figure 1, des conduites 9 et 10 relient respectivement les points C et F à un même point H, d'où part la conduite de production d'hydrogène impur 11.

Dans la variante de la Figure 3, chacun des étages 1 et 2 est constitué d'une série de perméateurs analogues (simples pour l'étage 1, à reflux pour l'étage 2) montés en parallèle. Ainsi, le feed arrivant au point A est divisé en n courants d'alimentation, et les n gaz résiduaires des perméateurs 1₁..., 1ₙ sont rassemblés en un point B pour constituer le mélange d'alimentation du deuxième étage 2. Puis, au point D, relié au point B par la conduite 8, ce mélange est à son tour divisé en p courants alimentant respectivement les perméateurs 2₁,...,2ₚ. L'ensemble des gaz résiduaires du deuxième étage sont rassemblés dans la conduite 12 d'évacuation du résiduaire de l'installation et, comme à la Figure 2, l'ensemble des perméats du premier étage sont rassemblés en un point C, l'ensemble des perméats du deuxième étage sont rassemblés en un point F, et les points C et F sont reliés à un point H d'où part la conduite de production 11.

Bien entendu, d'autres combinaisons de perméateurs en série et en parallèle peuvent être imaginées, pourvu que le premier étage 1 soit constitué de perméateurs simples et que le deuxième étage 2 soit constitué de perméateurs à reflux.

Dans les installations comportant plus de deux perméateurs, on a à disposition divers gaz pouvant servir de gaz de reflux, à savoir, outre le feed, les divers gaz résiduaires des perméateurs.

## Revendications

1. Procédé de production par perméation d'un gaz léger impur à partir d'un mélange gazeux de départ, caractérisé en ce que :
- on utilise une installation de perméation comprenant deux étages de perméation (1, 2) ayant chacun une entrée haute pression (A, D) de mélange gazeux à traiter, une sortie haute pression (B, E) de gaz résiduaire et une sortie basse pression (C, F) de perméat,
. le premier étage (1) étant constitué d'un perméateur simple, c'est-à-dire ayant une entrée active et deux sorties actives, à savoir une entrée haute pression (A) de mélange gazeux à traiter, une sortie haute pression (B) de gaz résiduaire et une sortie basse pression (C) de perméat, ou bien de plusieurs perméateurs simples (1₁,...., 1ₙ) montés en série et/ou en parallèle;
. le deuxième étage (2) étant constitué d'un perméateur à reflux, c'est-à-dire ayant deux entrées et deux sorties actives, à savoir une entrée haute pression (D) de mélange gazeux à traiter, une sortie haute pression (E) de gaz résiduaire, une entrée basse pression (G) de mélange gazeux de reflux et une sortie basse pression (F) de perméat, ou bien de plusieurs perméateurs à reflux (2₁,...2ₚ) montés en série et/ou en parallèle;
- on introduit le mélange gazeux de départ à l'entrée haute pression (A) du premier étage (1);
- on introduit le gaz résiduaire du premier étage (1) à l'entrée haute pression (D) du deuxième étage (2);
- on introduit à l'entrée basse pression (G) du deuxième étage (2) un mélange gazeux de reflux prélevé dans l'installation et ayant une teneur en ledit gaz léger inférieure à celle dudit gaz léger impur de production; et
- on réunit les perméats des deux étages (1, 2) pour constituer ledit gaz léger impur de production.

2. Procédé suivant la revendication 1, caractérisé en ce que ledit mélange gazeux de reflux est prélevé sur le gaz résiduaire du deuxième étage (2).

3. Application d'un procédé suivant la revendication 1 ou 2 à la production d'hydrogène impur.

4. Installation de production par perméation d'un gaz léger impur à partir d'un mélange gazeux de départ, caractérisée en ce qu'elle comprend deux étages de perméation (1, 2) ayant chacun une entrée haute pression (A, D) de mélange gazeux à traiter, une sortie haute pression (B, E) de gaz résiduaire et une sortie basse pression (C, F) de perméat,
- le premier étage (1) étant constitué d'un perméateur simple, c'est-à-dire ayant une entrée active et deux sorties actives, à savoir une entrée haute pression (A) de mélange gazeux à traiter, une sortie haute pression (B) de gaz résiduaire et une sortie basse pression (C) de perméat, ou bien de plusieurs perméateurs simples (1₁,..., 1ₙ) montés en série et/ou en parallèle;
- le deuxième étage (2) étant constitué d'un perméateur à reflux, c'est-à-dire ayant deux entrées et deux sorties actives, à savoir une entrée haute pression (D) de mélange gazeux à traiter, une sortie haute pression (E) de gaz résiduaire, une entrée basse pression (G) de mélange gazeux de reflux et une sortie basse pression (F) de perméat, ou bien de plusieurs perméateurs à reflux (2₁,...2ₚ) montés en série et/ou en parallèle;
- la sortie haute pression (B) du premier étage (11) étant reliée à l'entrée haute pression (D) du deuxième étage (2);
- l'installation comprenant une conduite d'alimentation (7) reliée à l'entrée haute pression (A) du premier étage (1), une conduite de production (11) reliée aux sorties basse pression (C, F) des deux étages (1, 2), et, pour le ou chaque perméateur du deuxième étage (2), une conduite de reflux (13) aboutissant à l'entrée basse pression (G) de ce perméateur et véhiculant un mélange gazeux de reflux prélevé dans l'installation et ayant une teneur en ledit gaz léger inférieure à celle dudit gaz léger impur de production.

5. Installation suivant la revendication 4, caractérisée en ce que la conduite de reflux (13) est piquée sur la conduite d'alimentation (7) ou sur une conduite (8, 12) véhiculant le gaz résiduaire d'un perméateur.

6. Installation suivant la revendication 4 ou 5, caractérisée en ce que la conduite de reflux (13) est reliée à la sortie haute pression (E) du perméateur correspondant (2; 2₁,..., 2ₚ) par l'intermédiaire d'une vanne de détente (14; 14₁,..., 14ₚ).

## Claims

1. Process for producing, by permeation, an impure light gas from a starting gaseous mixture, characterised in that:
- a permeation installation is used, comprising two permeation stages (1, 2) each having a high-pressure inlet (A, D) for a gaseous mixture to be treated, a high-pressure outlet (B, E) for residual gas and a low-pressure outlet (C, F) for permeate,
. the first stage (1) consisting of a simple permeator, that is to say one having one active inlet and two active outlets, namely a high-pressure inlet (A) for a gaseous mixture to be treated, a high-pressure outlet (B) for residual gas and a low-pressure outlet (C) for permeate, or several simple permeators (1₁, ..., 1ₙ) mounted in series and/or in parallel;
. the second stage (2) consisting of a reflux permeator, that is to say one having two active inlets and two active outlets, namely a high-pressure inlet (D) for a gaseous mixture to be treated, a high-pressure outlet (E) for residual gas, a low-pressure inlet (G) for a gaseous reflux mixture and a low-pressure outlet (F) for permeate, or several reflux permeators (2₁, ... 2ₚ) mounted in series and/or in parallel;
- the starting gaseous mixture is introduced at the high-pressure inlet (A) of the first stage (1);
- the residual gas from the first stage (1) is introduced at the high-pressure inlet (D) of the second stage (2);
- a gaseous reflux mixture taken from the installation and containing a proportion of the said lower light gas less than that of the said impure light production gas is introduced at the low-pressure inlet (G) of the second stage (2); and
- the permeates from the two stages (1, 2) are combined to constitute the said impure light production gas.

2. Process according to Claim 1, characterised in that the said gaseous reflux mixture is taken from the residual gas of the second stage (2).

3. Application of a process according to Claim 1 or 2 to the production of impure hydrogen.

4. Installation for the production by permeation of an impure light gas from a starting gaseous mixture, characterised in that it comprises two permeation stages (1, 2) each having a high-pressure inlet (A, D) for a gaseous mixture to be treated, a high-pressure outlet (B, E) for residual gas and a low-pressure outlet (C, F) for permeate,
- the first stage (1) consisting of a simple permeator, that is to say one having one active inlet and two active outlets, namely a high-pressure inlet (A) for a gaseous mixture to be treated, a high-pressure outlet (B) for residual gas and a low-pressure outlet (C) for permeate, or several simple permeators (1₁, ..., 1ₙ) mounted in series and/or in parallel;
- the second stage (2) consisting of a reflux permeator, that is to say one having two active inlets and two active outlets, namely a high-pressure inlet (D) for a gaseous mixture to be treated, a high-pressure outlet (E) for residual gas, a low-pressure inlet (G) for a gaseous reflux mixture and a low-pressure outlet (F) for permeate, or several reflux permeators (2₁, ... 2ₚ) mounted in series and/or in parallel;
- the high-pressure outlet (B) of the first stage (11) being connected to the high pressure inlet (D) of the second stage (2);
- the installation comprising a feed pipe (7) connected to the high-pressure inlet (A) of the first stage (1), a production pipe (11) connected to the low-pressure outlets (C, F) of the two stages (1, 2) and, for the permeator or permeators of the second stage (2), a reflux pipe (13) ending at the low-pressure inlet (G) of this permeator and conveying a gaseous reflux mixture taken from the installation and containing a proportion of the said lower light gas less than that of the impure light production gas.

5. Installation according to Claim 4, characterised in that the reflux pipe (13) is connected to the feed pipe (7) or to a pipe (8, 12) conveying the residual gas from a permeator.

6. Installation according to Claim 4 or 5, characterised in that the reflux pipe (13) is connected to the high-pressure outlet (E) of the corresponding permeator (2; 2₁, ..., 2ₚ) through a pressure reducing valve (14; 14₁, ..., 14ₚ).

## Patentansprüche

1. Verfahren zur Herstellung eines leichten unreinen Gases aus einem gasförmigen Startgemisch durch Permeation, dadurch gekennzeichnet, daß
- eine Permeationsvorrichtung verwendet wird, die zwei Permeationsstufen (1, 2) umfaßt, deren jede einen Hochdruckeingang (A, D) für das zu verarbeitende ende gasförmige Gemisch, einen Hochdruckausgang (B, E) für das Restgas und einen Niederdruckausgang (C, F) für das Permeat aufweist, wobei
die erste Stufe (1) durch einen einfachen Permeator gebildet wird, d.h. mit einem aktiven Eingang und zwei aktiven Ausgängen, und zwar einem Hochdruckeingang (A) für das zu verarbeitende gasförmige Gemisch, einem Hochdruckausgang (B) für das Restgas und einem Niederdruckausgang (C) für das Permeat, oder auch durch mehrere einfache, in Reihe und/oder parallel angeordnete Permeatoren (1₁, ...., 1ₙ);
die zweite Stufe (1) durch einen Permeator mit Rückführung gebildet wird, d.h. mit zwei aktiven Eingängen und Ausgängen, und zwar einem Hochdruckeingang (D) für das zu verarbeitende gasförmige Gemisch, einem Hochdruckausgang (E) für das Restgas, einem Niederdruckeingang (G) für das rückgeführte gasförmige Gemisch und einem Niederdruckausgang (F) für das Permeat, oder auch durch mehrere, in Reihe und/oder parallel angeordnete Permeatoren mit Rückführung (2₁, ...., 2ₚ);
- das gasförmige Startgemisch an dem Hochdruckeingang (A) der ersten Stufe (1) zugeführt wird;
- das Restgas der ersten Stufe (1) an dem Hochdruckeingang (D) der zweiten Stufe (2) zugeführt wird;
- ein rückgeführtes gasförmiges Gemisch, welches aus der Vorrichtung entnommen wurde und einen Gehalt an besagtem leichten Gas aufweist, der kleiner ist als der des leichten, unreinen Herstellungsgases, an dem Niederdruckeingang (G) der zweiten Stufe (2) zugeführt wird; und
- die Permeate der beiden Stufen (1, 2) wieder zusammengeführt werden, um das leichte, unreine Herstellungsgas zu bilden.

2. Verfahren nach Anspruch 1, dadurch gekennzeichnet, daß das rückgeführte gasförmige Gemisch aus dem Restgas der zweiten Stufe (2) entnommen wird.

3. Anwendung des Verfahren nach Anspruch 1 oder 2 zur Herstellung von unreinem Wasserstoff.

4. Vorrichtung zur Herstellung eines leichten, unreinen Gases aus einem gasförmigen Startgemisch durch Permeation, dadurch gekennzeichnet, daß
- zwei Permeationsstufen (1, 2) vorgesehen sind, deren jede eine Hochdruckeingang (A, D) für das zu verarbeitende gasförmige Gemisch, einen Hochdruckausgang (B, E) für das Restgas und einen Niederdruckausgang (C, F) für das Permeat aufweist, wobei
die erste Stufe (1) durch einen einfachen Permeator gebildet wird, d.h. mit einem aktiven Eingang und zwei aktiven Ausgängen, und zwar einem Hochdruckeingang (A) für das zu verarbeitende gasförmige Gemisch, einem Hochdruckausgang (B) für das Restgas und einem Niederdruckausgang (C) für das Permeat, oder auch durch mehrere einfache, in Reihe und/oder parallel angeordnete Permeatoren (1₁, ...., 1ₙ);
die zweite Stufe (2) durch einen Permeator mit Rückfuhrung gebildet wird, d.h. mit zwei aktiven Eingängen und Ausgängen, und zwar einem Hochdruckeingang (D) für das zu verarbeitende gasförmige Gemisch, einem Hochdruckausgang (E) für das Restgas, einem Niederdruckeingang (G) für das rückgeführte gasförmige Gemisch und einem Niederdruckausgang (C) für das Permeat, oder auch durch mehrere, in Reihe und/oder parallel angeordnete Permeatoren mit Rückführung (2₁, ...., 2ₚ);
- der Hochdruckausgang (B) der ersten Stufe (11) mit dem Hochdruckeingang (D) der zweiten Stufe (2) verbunden ist;
- die Vorrichtung eine mit dem Hochdruckeingang (A) der ersten Stufe (1) verbundene Speiseleitung (7), eine mit den Niederdruckausgängen (C, F) der beiden Stufen (1, 2) verbundene Herstellungsleitung (11) sowie für den oder jeden Permeator der zweiten Stufe (2) eine in den Niederdruckeingang (G) dieses Permeators mündende Rückführungsleitung (13) umfaßt, die ein rückgeführtes gasförmiges Gemisch fuhrt, das aus der Vorrichtung entnommen wurde und einen Gehalt an besagtem leichtem Gas aufweist, der kleiner als der des leichten unreinen Herstellungsgases.

5. Vorrichtung nach Anspruch 4, dadurch gekennzeichnet, daß die Rückführungsleitung (13) mit der Speiseleitung (7) oder eine das Restgas eines Permeators führende Leitung (8, 12) verbunden ist.

6. Vorrichtung nach Anspruch 4, dadurch gekennzeichnet, daß die Rückführungsleitung (13) mit dem Hochdruckausgang (E) des entsprechenden Permeators (2; 2₁, ..., 2ₚ) über ein Druckminderventil (14; 14₁, ..., 14ₚ) verbunden ist.
